# EUROPÄISCHE PATENTSCHRIFT

(11) **EP 2 639 009 B1**
(45) Veröffentlichungstag und Bekanntmachung des Hinweises auf die Patenterteilung: **01.07.2015**
(21) Anmeldenummer: 13158798.2
(22) Anmeldetag: 12.03.2013
(51) Int. Cl.: B23Q 3/155, B23Q 7/04

(54) **Werzeugzange, und Werkzeugwechsler und Werkzeugmagazin mit einer solchen Werkzeugzange**
Tool gripper, tool changer and tool magazine comprising such a tool gripper
Pinces pour outils, changeur d'outil et magasin d'outils comprenant une telle pince pour outils

(30) Priorität: 16.03.2012 DE 102012102263; 31.05.2012 DE 102012104733
(43) Veröffentlichungstag der Anmeldung: 18.09.2013
(73) Patentinhaber: Grob-Werke GmbH & Co. KG, 87719 Mindelheim (DE)
(72) Erfinder: Grob, Burkhart, 86825 Bad Wörishofen (DE)
(74) Vertreter: Schulz, Manfred

(56) Entgegenhaltungen:
- EP-A1- 1 690 632
- CH-A- 555 220
- DE-A1- 19 609 145
- DE-A1-102005 026 172
- DE-A1-102008 014 779

## Beschreibung

Die Erfindung betrifft eine Werkzeugzange, welche für das lösbare Halten eines Werkzeuges, zum Beispiel in einer Werkzeugmaschine, vorgesehen ist, und eine Werkzeugzange und ein Werkzeugmagazin.

Derartige Werkzeugzangen sind zum Beispiel aus den Druckschrift DE 10 2008 014 779 bekannt. Sie sind entweder einzeln oder in Form von Werkzeugwechslern in Werkzeugmaschinen oder Bearbeitungslinien bekannt. Dabei geht es darum, in einem Werkzeugvorrat vorgehaltene Bearbeitungswerkzeuge einer Werkzeugmaschine in die Bearbeitungsspindel hinein zu transportieren bzw. aus dieser zu entnehmen. Diese Prozesse erfolgen vollautomatisch, das heißt, ohne das händische Mitwirken einer Bearbeitungsperson. Im Stand der Technik ist es bekannt, derartige Werkzeugzangen aus einem Grundkörper und einem Zangenklemmkörper zu bilden. Dabei werden diese beiden Grundelemente der Werkzeugzange aus einem Gussmaterial hergestellt. Der Grundkörper ist beispielsweise etwas massiver ausgebildet als das Werkzeugklemmelement. Dieses ist beispielsweise über eine Achse bewegbar bzw. schwenkbar an dem Grundkörper angeordnet und bevorzugt federgelagert. Dabei ist möglich, durch einen Druck gegen die Federkraft die Zange zu öffnen. Beim Lösen der Kraft wird das Zangenklemmelement gegen das Werkzeug und seinen entsprechenden Aufnahmeelementen bzw. Klemmelementen gedrückt und dadurch gespannt. Ist das Werkzeug in der Zange gespannt, kann die Zange mit entsprechenden Antrieben von der Spindel wegbewegt und dann beispielsweise zu einem Werkzeugmagazin geschwenkt werden. Auch ist es möglich, ein Werkzeug aus einem Werkzeugmagazin zu entnehmen und zur Spindel der Werkzeugmaschine zu transportieren. Dort wird die Zange wieder geöffnet, wenn das Werkzeug beispielsweise in dem Magazin oder in der Spindel positioniert ist. Hierzu kann selbstverständlich auch anstelle des Werkzeugmagazins ein Werkzeugwechsler vorgesehen sein, der eine Vielzahl von Bearbeitungswerkzeugen für unterschiedlichste Bearbeitungsprozesse bzw. -Vorgänge vorhält. Das Anfertigen der Werkzeugzangen im Stand der Technik ist sehr aufwendig, weil es sich hierbei um Gusselemente handelt. Die Gussformen müssen dabei entsprechend vorgehalten werden, das Gießen ist mit entsprechend hohem Energieaufwand verbunden und auch zeitaufwendig. Des Weiteren müssen anschließend, nach dem Guss, die Zangenelemente, nämlich Grundkörper und Zangenklemmelement noch mechanisch bearbeitet werden, damit die entsprechenden Halte- bzw. Klemmelemente genau korrespondierend zu den Klemmelementen der Werkzeuge ausgebildet sind. Ein weiterer Nachteil der Werkzeugzangen im Stand der Technik ist das durch die Herstellungsart bedingte hohe Gewicht der Werkzeugzange. Aus der Druckschrift DE 35 31 160 ist eine wie zuvor beschrieben ausgebildete Werkzeugzange bekannt. Dabei ist die Werkzeugzange zweiteilig ausgebildet, wobei ein Zangenklemmelement in Form einer Wippe federgelagert an einem Grundkörper angeordnet ist.

Aus der Druckschrift DE 20 2010 003 378 ist eine Werkzeugwechselvorrichtung bekannt. Diese Werkzeugwechselvorrichtung weist mindestens eine Greifeinrichtung auf, die ein erstes Greiferelement und ein zwischen einer Klemmstellung und einer Wechselstellung bewegbares zweites Greiferelement zur lösbaren Halterung einer Werkzeugaufnahme oder eines Werkzeuges enthält. Ein Teil des bewegbaren zweiten Greiferelementes ist als Läufer eines elektrischen Linearantriebes ausgebildet.

Aus der Druckschrift EP 355 271 ist ein Greifer für Gegenstände bekannt. Dabei wird ein elastisches, im Trägerteil vorgesehenes Zangenelement vorgesehen, wobei die Elastizität durch entsprechende Ausnehmungen in dem Zangenmaterial erreicht wird.

Ausgehend von diesem Stand der Technik ist es Aufgabe der Erfindung, mindestens einen der Nachteile des Standes der Technik, wie zum Beispiel aufwendige Herstellung und hohes Gewicht zu beseitigen.

Die Aufgabe der Erfindung wird durch eine werkzeugzange gemäß Anspruch 1 definiert.

Durch diese erfindungsgemäße Ausgestaltung ist es jetzt möglich, anstelle der bisher üblichen Gusselemente den Grundkörper und das Zangenklemmelement aus einem Flachmaterial bzw. plattenförmigen Material zu bilden. Damit ist es in einfacher Bearbeitungsweise möglich, die beiden Zangenelemente herzustellen. Entgegen dem bisher aufwendigen Gussverfahren ist es jetzt nur noch notwendig, die beiden Elemente aus plattenförmigem Material, wie zum Beispiel Stahlblech, herauszutrennen oder herauszuschneiden. Dies kann durch einfache und dafür übliche Bearbeitungsverfahren geschehen. Der Bearbeitungsaufwand wird enorm gesenkt. Des Weiteren ist auch der Materialeinsatz insgesamt wesentlich geringer, so dass sich das Gewicht der erfindungsgemäßen Werkzeugzange deutlich verringert. Auch lässt sich die Herstellung mit beispielsweise CNC-gesteuerten Maschinen in wesentlich kürzerer Zeit realisieren, als dies für die Zangenelemente, nämlich den Zangengrundkörper und das Zangenklemmelement bisher notwendig war. Des Weiteren wird auch die bisher im Stand der Technik benötigte Druckfeder eingespart, weil das plattenförmige Flachmaterial eine gewisse Eigenelastizität aufweist, so dass auf die Feder ebenfalls verzichtet werden kann.

Von Vorteil ist, wenn die Werkzeugzange nach der Erfindung sich dadurch auszeichnet, dass das Zangenklemmelement aus einem eigenelastischen Material, wie zum Beispiel Federstahl, gebildet ist. Durch die Ausgestaltung des Zangenklemmelementes mit Federstahl ist natürlich die gesamte Werkzeugzange insgesamt noch wesentlich flexibler und insbesondere führt die Federkraft des Materials, die in sich selbst vorhanden ist dazu, dass die zusätzliche Feder an der Werkzeugzange nicht mehr benötigt wird. Die beiden Zangenelemente, nämlich Zangengrundkörper und Zangenklemmelement liegen flach aufeinander. Das Zangenklemmelement ist wenigstens an lediglich einer Stelle bzw. an einem Punkt des Grundkörpers festgelegt, so dass aufgrund der Federkraft das Zangenklemmelement durch seine Eigenelastizität leicht federn kann. Dadurch kann sich die Zange an dem dem Werkzeug zugewandten Ende bei Belastung mit Druck öffnen und bei Entlastung wieder schließen. Eine aufwendige wippenförmig ausgebildete Achse, die die beiden Zangenelemente verbindet, entfällt ebenfalls.

Gemäß der Erfindung ist eine elastische Verformung des Zangenklemmelementes zur Freigabe und/oder zum Klemmen des Werkzeuges vorgesehen, wobei durch das Eintragen einer Kraft auf das Zangenklemmelement gegen diese Elastizität sich das dem Werkzeug zugewandte Ende des Zangenklemmelementes vom Zangengrundkörper entfernt bzw. beim Weglassen dieser Kraft wieder auf ihn zu bewegt. Geschickter Weise ist es so, dass das Zangenklemmelement bezüglich der Materialstärke etwas schwächer ausgebildet ist, so dass die Elastizität des Materials ausreicht, um beim Einwirken einer Kraft allein aufgrund dieser Elastizität das dem Werkzeug zugewandte Ende von dem Grundkörper wegzubewegen und beim Nachlassen bzw. Abschalten der Kraft auf das Zangenklemmelement die Eigenelastizität des Zangenklemmelementes bzw. des Materials desselben ausreicht, um das Werkzeug zu klemmen. Dabei wird die Werkzeugzange natürlich so an dem Werkzeug positioniert, dass sie korrespondierend zu den Greifelementen des Werkzeuges angeordnet wird. Ist das geschehen, kann die Kraft beispielsweise gelöst werden, so dass aufgrund der Eigenelastizität die Zange das Werkzeug klemmt.

Neben den bereits zuvor beschriebenen Nachteilen des Standes der Technik mit einer federgelagerten Wippe entsteht bei derartigen Ausgestaltungen natürlich das Problem, dass die Feder durch die andauernde starke Belastung schnell ermüden und brechen kann. Dadurch wird natürlich ein entsprechender früherer Wechsel der gesamten Werkzeugzange in der Werkzeugmaschine notwendig, was entsprechende Kosten verursacht. Die Standzeiten solcher Werkzeugzangen sind demzufolge viel zu kurz. Auch bei der nächsten, weiter vorne beschriebenen Lösung des Standes der Technik ist ein Schwenkmechanismus gezeigt, der federbelastet wirkt. Dabei ist die Schwenkachse parallel zur Werkzeugachse und bei entsprechender Krafteinbringung auf das Werkzeug wird dieses in einer Bewegung rechtwinklig zur Werkzeugachse aus der Werkzeugzange herausgezogen. In diesem Fall gibt der federgelagerte Schwenkhebel nach. Ein federgelagerter Schwenkhebel hat natürlich die gleichen Nachteile, wie die bereits zuvor diskutierte Ausführungsform, da eine Feder den Nachteil hat, dass ihre Federkraft bei Dauerbelastung nachlässt und/oder die Feder spröde und dadurch zerbrechlich wird. Die Werkzeugzangen der in Rede stehenden Art sind natürlich in Werkzeugmaschinen eingesetzt, bei denen der Werkzeugwechsel sehr häufig durchgeführt wird, wodurch diese Feder natürlich enorm belastet wird. Außerdem ist der Linearantrieb sozusagen an dem Zangengrundkörper vorgesehen und bewegt nur einen Zangenteil bzw. eine Zangenhälfte für das Öffnen bzw. Schließen der Werkzeugzange. Der übrige Werkzeugwechselvorgang erfolgt über eine Schwenkachse, so dass das Werkzeug beim Herein- und Herausbewegen noch eine entsprechende Kraft auf die Werkzeugzangenhälfte auswirkt, um diese Schwenkbewegung zu erhalten. Dadurch entsteht ein entsprechender Verschleiß an dem Werkzeug und an der Zange. Des Weiteren ist nicht gewährleistet, dass die Werkzeugzange insgesamt aktiv betätigt werden kann, das heißt, dass in der Werkzeugwechselstellung noch eine zusätzliche Kraft auf das Werkzeug einwirken muss, um dieses aus der Zange heraus zu bewegen. Zudem ist der Verfahrvorgang des Linearmotors entsprechend zeitaufwändig, weshalb man sich entschieden hat, noch ein Zangenteil mit einer Achse zu versehen, um dieses elastisch verschwenken zu können. Im Gegensatz zu der erfindungsgemäßen Lösung ist auch hier die Schwenkachse für das verschwenkbare Zangenteil genau in Richtung der Werkzeuglängsachse angeordnet, was insgesamt einen Nachteil darstellt, weil man größere Kräfte benötigt, um den Öffnungs- bzw. Schließvorgang zu bewirken. Die erfindungsgemäße Lösung beseitigt diese Probleme vollständig.

Die nächste aus dem Stand der Technik bekannte Werkzeugzange zeichnet sich dadurch aus, dass die Zange selbst einstückig ausgebildet ist, wobei in der Zange entsprechende Ausnehmungen vorgesehen sind, um eine Elastizität zumindest einer der Zangenhälften zu erreichen. Beim Hineinbewegen des Werkzeuges, bzw. bei dessen Herausbewegen wird dabei durch die federartige Ausgestaltung der Werkzeugzange in Form der in die Zange eingebrachte Ausnehmungen eine gewisse Eigenelastizität ausgenutzt, um die Zangenhälfte aufzubiegen und dann durch die Eigenelastizität wieder zurück zu bewegen. Der Effekt dabei ist der, dass nur durch die Bewegungskraft des Werkzeuges beim Hineinschieben in die Werkzeugzange sich die Zange öffnet bzw. wieder schließt, wenn das Werkzeug an der richtigen Stelle positioniert ist. Eine aktive Beeinflussung der Werkzeugzange zum Öffnen bzw. Schließen ist bei dieser Lösung im Gegensatz zur erfindungsgemäßen Lösung selbstverständlich nicht möglich. Vielmehr ist auch bei dieser Lösung mit einem hohen Verschleiß an Werkzeug bzw. der entsprechenden Werkzeughalterung und der Werkzeugzange zu rechnen.

All diese Nachteile beseititgt die erfindungsgemäße Lösung durch die Ausgestaltung eines Zangengrundkörpers und eines darauf aus einem eigenelastischen Flachmaterial oder plattenförmigen eigenelastischen Material gebildeten Zangenklemmelement, das auf den Zangengrundkörper aufgelegt und dort befestigt ist, weil eine elastische Verformung des Zangenklemmelementes zur Freigabe und/oder zum Klemmen des Werkzeuges vorgesehen ist. Diese elastische Freigabe muss allerdings aktiv beeinflusst werden, das heißt, durch Einwirken einer Kraft beispielsweise auf das Zangenklemmelement, wobei ein wesentlicher Unterschied der erfindungsgemäßen Lösung zum Stand der Technik auch darin besteht, dass sich die Verschwenk- bzw. Biegeachse rechtwinklig zur Werkzeuglängsachse erstreckt, was im Stand der Technik immer identisch ist. Das heißt, im Stand der Technik ist immer eine parallel zur Längsachse des Werkzeuges sich erstreckende Biegeachse bzw. Verschwenkachse für die Werkzeugzange zum Bewirken des Öffnungs- bzw. Schließvorganges vorgesehen.

Nach der Erfindung wird demzufolge die den Werkzeugzangenelementen gemäß der Erfindung innewohnende Elastizität durch zusätzliche Mittel betätigt, das heißt, entweder durch eine wie bereits zuvor beschriebene einwirkende Öffnungskraft, die beispielsweise in Einsatzstellung von unten auf das Zangenklemmelement wirkt oder aber eine Kraft, die von oben an dem Klemmelement angreift. Beide Varianten sind von der Erfindung mit umfasst und unterscheiden die Erfindung natürlich wesentlich von den Lösungen des Standes der Technik. Ergänzend wird noch festgehalten, dass eine Feder, wie sie im Stand der Technik eingesetzt wird, grundsätzlich Nachteile bietet. Sie kann erlahmen oder brechen und dadurch die Haltefunktion dann nicht mehr zuverlässig ausüben. Eine Feder ist als zusätzliches Bauteil sehr aufwändig im Einbau. Des Weiteren können auch Bruch - und Verschleißerscheinungen die Zuverlässigkeit der Werkzeugzange oder des Greif- bzw. Haltevorganges erheblich beeinträchtigen.

Gemäß einer vorteilhaften Weiterbildung, die selbstverständlich auch im Zusammenhang mit den vorher beschriebenen Merkmalen kombinierbar ist, ist eine Werkzeugzange vorgesehen, bei der an dem Zangenklemmelement ein bevorzugt zwei Biegebereiche vorgesehen ist/sind, in dem/denen sich das Zangenklemmelement bei Beaufschlagung mit einer Kraft oder Öffnungskraft elastisch verformt. Dadurch, dass das Zangenklemmelement auf dem Zangengrundkörper festgelegt ist, wird beim Einwirken einer Kraft bzw. Öffnungskraft die elastische Verformung des Zangenklemmelementes aktiv bewirkt. Dabei ist der Grundkörper so ausgebildet, dass die Kraft auf das Zangenklemmelement in Einbaustellung von oben oder aber die Öffnungskraft in Einbaustellung von unten auf das Zangenklemmelement wirkt. Dabei ist klar, dass wenigstens eine Biegeachse bzw. Biegekante vorgesehen ist, die sich im Wesentlichen rechtwinklig zur Längsachse des Werkzeuges erstreckt, wobei sich dann natürlich auch der oder die Biegebereich(e) rechtwinklig zur Längsachse des Werkzeuges erstrecken. Wie bereits zuvor erwähnt, bietet dies erhebliche Vorteile gegenüber den Lösungen des Standes der Technik und führt insbesondere dazu, dass eine insbesondere formschlüssige Verbindung in einer Werkzeughaltestellung erreicht wird, während die Werkzeugöffnungsstellung nur erreichbar ist, wenn das Zangenklemmelement aktiv beeinflusst, das heißt, entweder mit der Öffnungskraft oder der Kraft beaufschlagt wird.

Demzufolge ist es nach der Erfindung vorgesehen, dass die Werkzeugzange eine Werkzeughaltestellung und eine Werkzeugwechselstellung aufweist. Die Werkzeugwechselstellung ist dabei durch die Beaufschlagung bwz. das Angreifen der Kraft und/oder der Öffnungskraft aktiv einstellbar bzw. erreichbar, wobei die Werkzeughaltestellung, das heißt, im nicht mit der Kraft beaufschlagten Zustand, sich diese automatisch einstellt.

Von Vorteil ist dabei auch, wenn wenigstens ein Antrieb für das Erzeugen der Kraft bzw. der Öffnungskraft vorgesehen ist, wobei sich insbesondere bevorzugt das Werkzeug in der Werkzeughaltestellung formschlüssig in der Werkzeugzange befindet und dort derart gehalten ist, dass es nicht aus der Werkzeugzange lösbar ist. Die Kraft bzw. Öffnungskraft kann dabei auf unterschiedlichste Weise zur Verfügung gestellt werden, beispielsweise durch die Bewegung der Werkzeugzange selbst. So kann diese beispielsweise gegen einen Anschlag in der Werkzeugmaschine gefahren werden, um diese Kraft zu erzeugen. Selbstverständlich kann diese Kraft auch beim Einbringen des Werkzeuges in die Spindel erfolgen, indem beispielsweise an dem Spindelkopf der Werkzeugmaschine eine entsprechende Auflage bzw. ein Betätigungselement vorhanden ist, das die Öffnungskraft bewirkt. Demzufolge benötigt man in der einfachsten Variante der Erfindung keinen zusätzlichen Antrieb für das Öffnen der Werkzeugzange selbst, sondern man kann in der Werkzeugmaschine vorhandene Möglichkeiten nutzen, um diese Kraft zu erzeugen. Natürlich ist es auch möglich, an der Werkzeugmaschine zusätzliche Mittel vorzusehen, mittels derer die Kraft bzw. Öffnungskraft erzeugt werden kann.

Demzufolge zeichnet sich eine Weiterbildung auch dadurch aus, dass zur Erzeugung der Kraft und/oder Öffnungskraft wenigstens ein Betätiger, insbesondere ein Hydraulik- oder Pneumatikzylinder, ein elektromechanischer Antrieb oder ein Linearantrieb vorgesehen ist, wobei bevorzugt ein erster Betätiger an dem Hydraulik- oder Pneumatikzylinder als Antrieb zur Erzeugung der Kraft und ein zweiter Betätiger an der Spindel bzw. dem Spindelkopf der Werkzeugmaschine vorgesehen ist, um mit einer Nocke, die am Zangenklemmelement angeordnet ist, als Antrieb zur Erzeugung der Öffnungskraft zusammenzuwirken.

Demzufolge wurde zuvor klargestellt, dass die beschriebenen Ausführungsformen der erfindungsgemäßen Werkzeugzange sich grundsätzlich dadurch vom Stand der Technik unterscheiden, dass nur durch eine aktive Beeinflussung der Werkzeugzange das Werkzeug aus der Werkzeugzange gelöst werden kann. Die Werkzeugwechselstellung ist nur erreichbar, indem eine Kraft aktiv auf das Zangenklemmelement wirkt, wodurch die Zange sich öffnet, während sich die Werkzeughaltestellung bei Wegfallen der Kraft aufgrund der Eigenelastizität des Zangenklemmelementmaterials wieder einstellt. Das Herausnehmen des Werkzeugs aus der Werkzeugzange ist dabei völlig verschleißfrei, weil eine mechanische Kraftkomponente jetzt für diesen Vorgang nicht mehr notwendig ist.

Die erfindungsgemäße Ausgestaltung ist dabei so, dass das Zangenklemmelement eine hohe Dauerbelastung aushält, weil keine eingliedrigen Federn vorhanden sind.

Dadurch, dass das Zangenklemmelement im Vergleich zum Stand der Technik natürlich entsprechend kompakt ausgebildet ist, weist es nicht die Feingliedrigkeit auf wie eine Feder und ist demzufolge weniger störanfällig. Ein weiterer erfindungsgemäßer Vorteil, der bereits mehrfach beschrieben wurde ist der, dass sich das Werkzeug eben nicht von allein - auch nicht bei Beaufschlagung mit einer Bewegungskomponente des Werkzeugs selbst - in Richtung aus der Werkzeugzange heraus, sondern nur durch Betätigung der Werkzeugzange mit Hilfe der Kraft mit Hilfe der Öffnungskraft bewegt. Dies sind erfindungsgemäß große Vorteile, die bei bestimmungsgemäßem Einsatz dazu führen, dass die Werkzeugstillstandzeiten aufgrund von vorzeitigem Verschleiß der Werkzeugzange in erheblichem Maße verringert werden. Des Weiteren lässt sich die Werkzeugzange nach der Erfindung aufgrund der erfindungsgemäßen Ausgestaltung fertigungstechnisch relativ einfach herstellen.

Gemäß einer vorteilhaften Weiterbildung der Erfindung zeichnet sich die Werkzeugzange dadurch aus, dass der Zangengrundkörper eine größere Materialstärke, insbesondere eine drei- bis fünfmal so große Materialstärke, bevorzugt viermal so große Materialstärke aufweist, als das Zangenklemmelement. Der Zangengrundkörper ist demzufolge etwas massiver ausgeführt, als das Zangenklemmelement. Dadurch, dass der Zangengrundkörper beispielsweise aus Stahlblech oder Stahl herausgschnitten wird und die größere Materialstärke aufweist, ist der Zangengrundkörper ausreichend stabil, dass er sich nicht verformt, wenn eine Kraft auf den Zangenklemmkörper eingebracht wird. Der Zangenklemmkörper ist so an dem Zangengrundkörper festgelegt, dass er zumindest auf der dem Werkzeug zugewandten Seite im Einsatzfall sich vom Grundkörper weg bzw. auf diesen zu bewegen kann. Dadurch gelingt es, entsprechende Abstände zu schaffen, die ausreichen, um das Werkzeug an den Greifelementen sicher zu fassen und zu klemmen.

Die Werkzeugzange nach der Erfindung ist auch dadurch gekennzeichnet, dass der Zangengrundkörper und auch das Zangenklemmelement mittels einfacher Bearbeitungsverfahren, wie zum Beispiel Trennschneiden, Trennschweißen, Stanzen, Herauslasern oder dergleichen aus dem Flachmaterial bzw. dem plattenförmigen Material erhalten wird. Das heißt, man spart den aufwendigen Vorgang des Anfertigens von entsprechenden Gussformen und das Gießen selbst ein. Des Weiteren ist es natürlich möglich, durch diese Herstellungsweise den Materialeinsatz gegenüber den im Stand der Technik bekannten Zangen erheblich zu reduzieren. So reduziert sich das Gewicht nahezu auf die Hälfte des Gewichtes einer Werkzeugzange aus dem Stand der Technik. Neben der Materialeinsparung und gleichzeitig der damit verbundenen Energieeinsparung beim Einsatz der Werkzeugzange (diese muss nicht mehr mit so hohen Kräften bewegt werden, wie die Werkzeugzangen im Stand der Technik) ist natürlich der Grundkörper und das Zangenklemmelement bedingt durch das günstigere Herstellungsverfahren in wesentlich kürzerer Zeit herzustellen als die Gusselemente im Stand der Technik.

Von Vorteil ist auch, wenn der Zangengrundkörper an der dem Werkzeug zugewandten Seite eine halb- bzw. drittelkreisartige Ausformung als Werkzeugaufnahme aufweist, die durch wenigstens ein, bevorzugt zwei Positioniersegmente unterbrochen ist/sind. Diese Werkzeugaufnahme ist natürlich korrespondierend zu den Greifelementen des Werkzeuges selbst ausgestaltet. Sie bezieht sich natürlich auch bezüglich der Materialstärke auf eine beispielsweise am Werkzeug vorhandene Nut, in die der Grundkörper beispielsweise eingreift. Dazu wird zumindest ein Teil der halb- bzw. drittelkreisartigen Ausformung keilförmit auslaufend ausgeführt. Das heißt, die keilförmige Ausgestaltung läuft in Einsatzstellung dem Werkzeug zugewandt aus. Dies verbessert natürlich das Eingreifen der Zange in das Werkzeug in die am Werkzeug regelmäßig vorhandene Umfangsnut als Greifnut. Durch die keilförmige Ausformung erfolgt sozusagen auch eine Eigenzentrierung des Grundkörpers an dem Greifelement des Werkzeuges. Die halb- bzw. drittelkreisartige Ausformung als Werkzeugaufnahme hat sich dabei bewährt und ist natürlich der Form des Werkzeuges korrespondierend zu den dort vorhandenen Greifelementen angepasst.

Bevorzugt befinden sich in der halb- bzw. drittelkreisartigen Ausformung wenigstens ein, bevorzugt jedoch zwei Positioniersegmente. Dadurch wird die halb- bzw. drittelkreisartige Ausformung unterbrochen. Dadurch gelingt es, das Werkzeug genau so zu positionieren, wie es für ein sicheres Greifen und für einen sicheren Transport von dem Werkzeugmagazin zur Spindel oder umgekehrt notwendig ist. Demzufolge zeichnet sich die zuvor beschriebene Weiterbildung der Erfindung dadurch aus, dass die Werkzeugaufnahme im Schnitt betrachtet keilförmig nach außen bzw. in Einsatzstellung dem Werkzeug zugewandt auslaufend ausgebildet ist, um in der Werkzeughaltestellung in eine Umfangsnut des Werkzeuges eingreifbar zu sein. Die Vorzüge dieser Ausgestaltung wurden bereits erwähnt.

Erfindungsgemäß wurde gefunden, dass es von Vorteil ist, wenn das Zangenklemmelement in mindestens einem Befestigungspunkt am Zangengrundkörper gelagert ist. Dadurch, dass das Zangenklemmelement an einem oder mehreren Befestitungspunkten am Zangengrundkörper gelagert ist, wird ermöglicht, dass die federnde Eigenschaft des Zangenklemmelementes genutzt werden kann. Der Befestigungspunkt ist dabei so zu verstehen, dass an diesem Punkt das Zangenklemmelement festgelegt ist. Der Befestigungspunkt bzw. die Befestigungspunkte ersetzen die im Stand der Technik notwendige Achse. Die anderen Stellen des Zangenklemmelementes sind jedoch frei bewegbar und insbesondere durch die Elastizität des Materials des Zangenklemmelementes wird eine Zangenklemmfunktion ermöglicht.

Um diesen Effekt insgesamt zu ermöglichen und/oder zu verbessern, besitzt der Zangengrundkörper auf der vom Werkzeug abgewandten Seite eine U-artige Ausnehmung. Dadurch entstehen außen zwei seitliche Stege, wobei zumindest an einem der Stege einer der zuvor genannten Befestigungspunkte vorgesehen ist. So kann beispielsweise der Befestigungspunkt auch als Zangengelenk verstanden werden. Drückt man beispielsweise das Zangenklemmelement zwischen den beiden Stegen in das U hinein, bewegt sich aufgrund der Festlegung am Zangengelenk bzw. an den Befestigungspunkten der Stege das Zangenklemmelement an der dem Werkzeug zugewandten Seite vom Zangengrundkörper weg. Lässt man die Kraft wieder weg bzw. wird diese verringert, wird sich das Zangenklemmelement wieder auf den Zangengrundkörper zubewegen.

Demzufolge zeichnet sich die Erfindung auch dadurch aus, dass ein Zangengelenk durch wenigstens je einen Befestigungspunkt an den Stegen des Zangengrundkörpers gebildet ist. Von Vorteil ist es natürlich, wenn das Zangenklemmelement im montierten Zustand, vorzugsweise genau korrespondierend zu den Kanten der U-artigen Ausnehmung des Zangengrundkörpers, geschlitzt ist, so dass mittig eine Lasche gebildet ist, die im Bereich der U-artigen Ausdehnung angeordnet ist. Dies ist natürlich eine sehr geschickte Ausführung, weil dadurch die Zangenfunktion insgesamt verbessert wird. So kann beispielsweise eine Kraft auf die Lasche einwirken, um das Zangenklemmelement an dem Ende, welches dem Werkzeug zugewandt ist, von dem Zangengrundkörper abzuheben.

Die Erfindung ist auch durch die Möglichkeit des Einwirkens einer Kraft auf die Lasche gekennzeichnet, die die Lasche in die U-förmige Ausnehmung verstellt. Dadurch verformt sich das Zangenklemmelement um eine Biegekante in einem Biegebereich derart elastisch, dass sich das dem Werkzeug zugewandte Ende des Zangenklemmelementes von dem Zangengrundkörper entfernt. Das heißt, die Kraft wirkt auf die Lasche und zwar genau entgegengesetzt der Öffnungsrichtung des Zangenklemmelementes. Lässt man die Kraft wieder weg, bewegt sich das Zangenklemmelement genau an diesem Ende wieder auf den Zangengrundkörper zu. Das Einwirken einer Kraft kann aber auch genau in entgegengesetzte Richtung erfolgen, nämlich dadurch, dass an dem Zangengrundkörper zwischen der Werkzeugaufnahme und dem Befestigungspunkt mindestens eine Durchdringungsöffnung vorgesehen ist, die einseitig von dem Zangenklemmelement verdeckt ist und dadurch eine Öffnungskraft durch die Durchdringungsöffnung auf das Zangenklemmelement wirken kann, wodurch sich das Zangenklemmelement um eine weitere Biegekante bzw. in einem weiteren Biegebereich derart elastisch verformt, dass sich das dem Werkzeug zugewandte Ende des Zangenklemmelementes vom Zangengrundkörper entfernt. Bevorzugt ist natürlich die Wirkrichtung dieser Kraft als zweite Kraft der zuerst beschriebenen Öffnungskraft entgegengerichtet. Somit ist es durch die erfindungsgemäße Lösung in einfacher Weise möglich, Kräfte von unterschiedlichen Richtungen her zum Öffnen der Werkzeugzange auf das Zangenklemmelement einwirken zu lassen, nämlich einmal auf die oben beschriebene Lasche und zum anderen von der anderen Seite in entgegensetzte Richtung durch die Durchdringungsöffnung auf das Zangenklemmelement.

Von Vorteil ist weiterhin, wenn das Zangenklemmelement an der dem Werkzeug zugewandten Seite eine C-förmig ausgebildete Spannmulde aufweist, deren äußere Enden hakenförmig ausgebildet sind. Diese hakenförmigen Enden greifen in der Werkzeughaltestellung in Zentriernuten des Werkzeuges ein. Von Vorteil ist es weiterhin, wenn an dem Zangenklemmelement wenigstens eine Ausrichtkante vorgesehen ist, die beim bestimmungsgemäßen Gebrauch in eine am Werkzeug vorgesehene Ausrichtecke eingreift. Das Werkzeug für die erfindungsgemäße Werkzeugzange kann beispielsweise als spanabhebendes Werkzeug, wie zum Beispiel ein Bohrer, ein Fräser oder dergleichen, ausgebildet sein. Genausogut kann es aber als Mess- oder Tastwerkzeug ausgebildet sein. Hier ist die Erfindung nicht auf einen bestimmten Werkzeugtyp eingeschränkt. Vielmehr ist es wichtig, dass die Werkzeugzange und die Greifelemente des Werkzeuges selbst korrespondierend zueinander ausgebildet sind, um ein Eingreifen zu ermöglichen.

Die Erfindung betrifft auch einen Werkzeugwechsler für das Einsetzen eines Werkzeuges in oder das Entfernen eines Werkzeuges aus einer Aufnahme, zum Beispiel der Werkzeugaufnahme der Arbeitsspindel einer Werkzeugmaschine, wobei der Werkzeugwechsler mindestens eine Werkzeugzange, wie vorher beschrieben, aufweist und ein gesteuerter Antrieb für das Positionieren der Werkzeugzange an der Arbeitsspindel bzw. an einem Werkzeugmagazin vorgesehen ist. Der Werkzeugwechsler dient regelmäßig in Werkzeugmaschinen dazu, die jeweils benötigten Werkzeuge in der Spindel zu positionieren bzw. von dort herauszunehmen, um ein neu benötigtes Werkzeug für einen anderen Bearbeitungsprozess aus dem Werkzeugmagazin beispielsweise zu entnehmen und jeweils zur Spindel oder zurück zu transportieren, je nach dem, welche Aufgabe zu erfüllen ist. Vorteilhafter Weise hat so ein Werkzeugwechsler wenigstens zwei der zuvor beschriebenen Werkzeugzangen, wodurch die Werkzeugwechseltätigkeit insgesamt wesentlich effektiver zu gestalten ist. Demzufolge ist ein solcher Werkzeugwechsler aufgrund der Ausgestaltung mit einer Werkzeugzange nach der Erfindung insgesamt auch leichter und damit mit weniger Energieaufwand zu bewegen. Auch kann der Werkzeugwechsel durch den Werkzeugwechsler nach der Erfindung insgesamt beschleunigt werden, da die Zange je nach dem wo sie sich gerade befindet, von unterschiedlichen Richtungen aus ansteuerbar ist. So kann sie beispielsweise gegen einen Bolzen gesteuert werden, der sozusagen als Begrenzungselement vorgesehen ist. Wird die Zange mit dem Werkzeugwechsler an diesen Bolzen herangefahren, hebt sich beispielsweise das Zangenklemmelement von dem Zangengrundkörper ab, so dass das Werkzeug entweder entnommen oder aber eingefügt werden kann. Genauso ist es möglich, eine Kraft beispielsweise auf das andere Ende der Zange wirken zu lassen, um ebenfalls das Anheben des Zangenklemmelementes zu bewirken. Somit ist der Werkzeugwechsler durch die Ausgestaltung mit den erfindungsgemäßen Werkzeugzangen nicht nur leichter, sondern insgesamt wesentlich effizienter. Damit kann beispielsweise der Positionierantrieb gleichzeitig auch zur Betätigung des Zangenöffnungs- bzw. -Schließvorgangs genutzt werden. Die Einsparung der Werkzeugwechselzeit wirkt sich auf den Gesamteinsatz der Werkzeugmaschine aus. Das heißt, die eigentlichen Bearbeitungszeiten der Maschine können dadurch deutlich verlängert werden.

Die Erfindung betrifft auch ein Werkzeugmagazin, in welchem eine Vielzahl von Werkzeugen entnehmbar vorhaltbar ist, wobei das Werkzeugmagazin mindestens zwei Werkzeugzangen, wie vorher beschrieben, aufweist. Durch die günstige Art der Herstellung der Werkzeugzange nach der Erfindung ist es jetzt natürlich auch möglich, entweder einen Werkzeugwechsler oder auch ein Werkzeugmagazin aus einer Trägerplatte herauszuschneiden, wobei die Trägerplatte so ausgeformt wird, dass wenigstens zwei Werkzeugzangengrundkörper gleich beim Herstellungsprozess der Trägerplatte entstehen. So kann man beispielsweise eine Trägerplatte verwenden, die quadratisch, rechteckig, rund oder oval ausgebildet ist. Am Außenrand dieser Trägerplatte werden dann die Ausformungen für den Zangengrundkörper herausgearbeitet. Das Zangenklemmelement wird dann ebenfalls analog zur Herstellung einer einzelnen Zange in Form einer Platte so erhalten, dass beim Auflegen der Klemmplatte auf die Trägerplatte durch die korrespondierende Anordnung hier eine Vielzahl von Werkzeugzangen entsteht.

Demzufolge zeichnet sich eine Weiterbildung der Erfindung dadurch aus, dass ein Zangenträger, insbesondere eine Trägerplatte oder eine umlaufende Kette oder ein umlaufendes Band vorgesehen ist, das eine Vielzahl einzelner - jeweils unabhängig voneinander angeordneter -Werkzeugzangen trägt. Durch die geschickte Ausgestaltung des Werkzeugmagazines oder auch eines Werkzeugwechslers wie zuvor beschrieben, kann man den Herstellungsprozess für den Werkzeugwechsler und auch das Werkzeugmagazin insgesamt deutlich verbessern. So ist auch hier ein wesentlich geringerer Materialeinsatz erforderlich, als beispielsweise bei der Herstellung von Werkzeugmagazinen oder Werkzeugwechslern in traditioneller Bauweise. Des Weiteren ist auch ein deutlich geringerer Materialeinsatz notwendig, so dass auch die für die Bewegung der Magazine und/oder Werkzeugwechsler notwendige Energie insgesamt reduziert werden kann. Wie bereits erwähnt, verringert sich der Gewichtsanteil einer Werkzeugzange nach der Erfindung um ca. 50 Prozent gegenüber dem Stand der Technik. Bei Werkzeugmagazinen bzw. Werkzeugwechslern mit den Werkzeugzangen nach der Erfindung reduziert sich dieser Anteil nochmals deutlich.

Vorteilhaft ist auch, wenn das Werkzeugmagazin eine Zangengrundkörperplatte aufweist, auf der einstückig mindestens zwei Zangengrundkörper angeordnet bzw. vorgesehen sind und das Werkzeugmagazin eine Zangenklemmelementenplatte aufweist, auf der einstückig mindestens zwei Zangenklemmelemente angeordnet bzw. ausgeformt sind und die Zangengrundkörperplatte und die Zangenklemmelementeplatte derart zueinander angeordnet und verbunden sind, dass sich zumindest zwei Werkzeugzangen ergeben. Eine solche Ausgestaltung eines Werkzeugmagazines oder eines Werkzeugwechslers ist äußerst effizient und führt zu Materialeinsparungen im Herstellungsprozess, aber insbesondere auch zu Energieeinsparungen beim Betreiben der Werkzeugwechsler bzw. Werkzeugmagazine.

Ein Werkzeugmagazin wie zuvor beschrieben zeichnet sich entsprechend einer Weiterbildung dadurch aus, dass die Zangengrundkörperplatte und die Zangenklemmelementplatte konturähnlich ausgebildet sind. Diese konturähnliche Ausgestaltung wurde zuvor bereits beschrieben und führt dazu, dass man ein Werkzeugmagazin beispielsweise aus zwei plattenförmigen Elementen herstellen kann, die entsprechende Ausformungen aufweisen. Von Vorteil ist insbesondere, wenn die Zangengrundkörperplatte und die Zangenklemmelementeplatte ring- oder scheibenartig ausgebildet ist bzw. sind, wobei die Zangengrundkörperplatte und die Zangenklemmelementeplatte aus plattenförmigem Material hergestellt sind. Dabei weist das Material für die Zangengrundkörperplatte eine gleichdicke Materialstärke auf, genauso wie die Zangenklemmelementeplatte. Diese ist, wie bei der erfindungsgemäßen Werkzeugzange bereits beschrieben, von der Materialstärke her natürlich schwächer, um das elastische Moment des Zangenklemmelementes ausnutzen zu können. Demzufolge ist die Zangengrundkörperplatte beispielsweise aus einem Werkzeugstahl oder Stahlblech geformt, während die Zangenklemmelementeplatte aus einem elastischen Material, zum Beispiel aus Federstahl gebildet ist. Die Zangengrundkörper bzw. die Zangenklemmelemente des so hergestellten Werkzeugmagazins werden ebenfalls durch Schneid-, Stanz- oder spanabhebende Bearbeitung herausgearbeitet. Somit ist klar, dass auch hier die aufwendigen Arbeiten für die Herstellung eines Werkzeugmagazins mit entsprechenden Werkzeugzangen in erheblichem Maße erleichtert werden und auch der Aufwand erheblich reduziert wird.

Erfindungsgemäß wurde gefunden, dass es auch von Vorteil ist, wenn das Werkzeugmagazin nach der Erfindung eine Zangengrundkörperplatte aufweist, die eine Vielzahl von insbesondere einzelnen Zangenklemmelementen trägt. Der Zangengrundkörper ist dabei, wie vorher beschrieben, entsprechend ausgeformt, sodass eine Vielzahl von Zangengrundkörpern, mindestens jedoch ein Zangengrundkörper in der Zangengrundplatte gebildet ist. Auf den ausgeformten, d.h. konturähnlich ausgebildeten Grundkörper auf der Zangengrundkörperplatte wird dann wenigstens ein Zangenklemmelement einzeln angeordnet. Diese Anordnung erfolgt dabei insbesondere lösbar fest. Dies hat den Vorteil, dass man das einzelne Zangenklemmelement, was höher beansprucht wird, im bestimmungsgemäßen Einsatz natürlich bei einer Beschädigung beziehungsweise bei einem Verschließ wechseln kann. Dadurch wird natürlich die Langlebigkeit des gesamten Werkzeugmagazins verbessert, weil man eben nicht immer eine gesamten Zangeklemmelementplatte auswechseln muss, wie in der vorher beschriebenen Ausführungsform, sondern hier nur ein einzelnes Zangenklemmelement. Dabei kann natürlich auf dem Zangengrundkörper eine Vielzahl von Zangengrundkörpern ausgeformt sein, sodass auch eine Vielzahl von Zangenklemmelementen dort einzeln befestigbar sind. Demzufolge wird sich je nach unterschiedlicher Anwendung auch ein unterschiedlicher Verschleiß an den Zangenklemmelementen ergeben, weshalb eine einzelne Austauschbarkeit von Vorteil sein kann.

Eine Weiterbildung der zuvor beschriebenen Ausführungsform schlägt vor, dass die Zangengrundkörperplatte konturähnlich ausgebildet ist, sodass wenigstens ein, bevorzugt eine Vielzahl von Zangengrundkörpern ausgeformt ist/sind, wenigstens ein, bevorzugt eine Vielzahl von einzelnen Zangenklemmelementen auf der Zangengrundkörperplatte deckungsgleich beziehungsweise korrespondierend auf den ausgeformten Zangengrundkörper befestigt sind, sodass eine oder mehrere Werkzeugzangen gebildet ist/sind. Dies ist eine bevorzugte Ausgestaltung der zuvor allgemein beschriebenen Ausführungsform. Dabei wird deutlich, dass es eben möglich ist, ein Werkzeugmagazin mit einer Vielzahl von Werkzeugzangen so in dem Werkzeugmagazin auszubilden, dass man eine universelle Wechselbarkeit von einzelnen Zangenklemmelementen ermöglicht.

Dabei sind, wie bereits erwähnt, die Zangeklemmelemente lösbar fest, d.h. mit entsprechenden Befestigungsmitteln, auf der

Zangengrundkörperplatte befestigt. Als Befestigungsmittel zur lösbar, festen Festlegung der Befestigungspunkte dient je eine Schraube, ein Bolzen oder dergleichen. Es ist natürlich auch möglich, wie weiter vorn beschrieben, dass zwei Schrauben an jeder Seite einen Befestigungspunkt jeweils festlegen. Die Erfindung ist hier nicht auf eine der beschriebenen Ausführungsformen eingeschränkt. Selbstverständlich kann man auch einen Bolzen dort vorsehen, der dann entweder ein Gewinde trägt, um eine Mutter aufzunehmen oder aber ein anderes klemmendes Mittel, welches vorzugsweise natürlich lösbar ist.

Wie erwähnt schlägt die Erfindung demnach auch vor, dass eine jeweils einzelne Austauschbarkeit des/der Zangenklemmelemente(s) vorgesehen ist. Die Vorzüge dieser Ausgestaltung wurden bereits beschrieben. Nicht unerwähnt bleiben soll, dass die für das Werkzeugmagazin beschriebene Ausführungsform natürlich auch für den weiter vorn beschriebenen Werkzeugwechsler zutrifft. Auch hier ist es möglich, eine entsprechende Zangengrundkörperplatte so auszuformen, dass einen Vielzahl von Zangengrundkörpern in dieser Zangengrundkörperplatte gebildet ist, auf welchen eine Vielzahl von Zangenklemmelementen angeordnet werden. Ansonsten ist die Ausgestaltung eines solchen Werkzeugwechslers so zu verstehen, wie weiter vorn beschrieben.

In der Zeichnung ist die Erfindung insbesondere in einem Ausführungsbeispiel schematisch dargestellt. Es zeigen:
- Fig. 1a bis 1c: Verschiedene Ansichten einer Ausführungsform der erfindungsgemäßen Werkzeugzange
- Fig. 2: einen Werkzeugwechsler bzw. ein Werkzeugmagazin nach der Erfindung.
- Fig. 3: eine schematische Darstellung der Anordnung einer Werkzeugzange nach der Erfindung an einem Spindelkopf einer Werkzeugmaschine.

In den Figuren sind gleiche oder einander entsprechende Elemente jeweils mit den gleichen Bezugszeichen bezeichnet und werden daher, sofern nicht zweckmäßig, nicht erneut beschrieben.

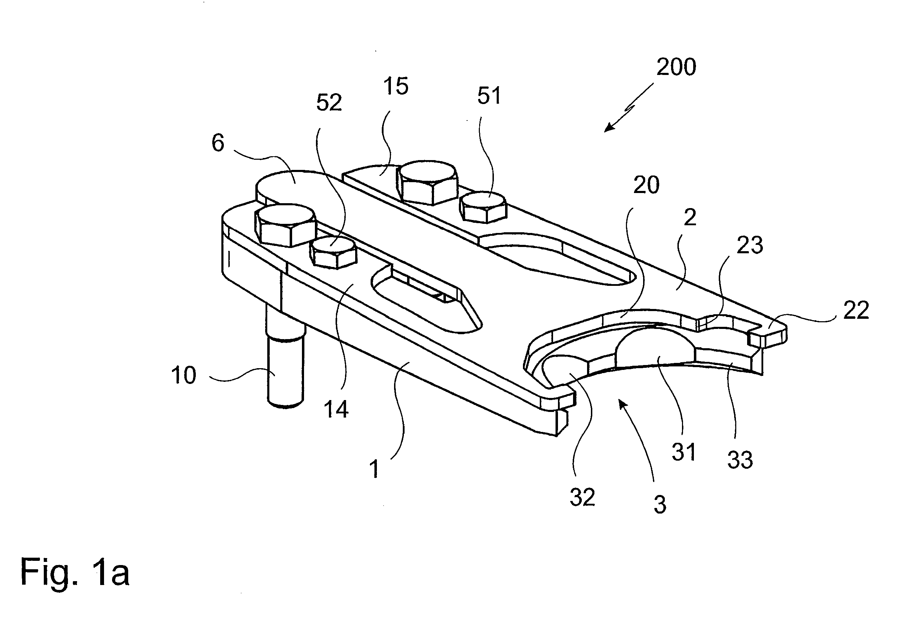

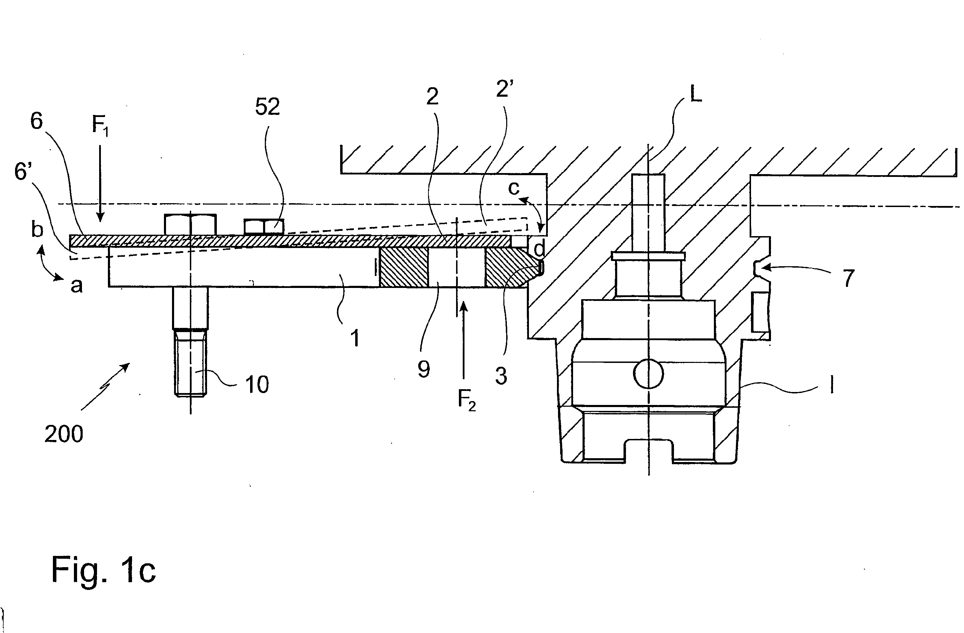

In den Figuren 1a bis 1c sind verschiedene Ansichten einer Ausführungsform einer erfindungsgemäßen Werkzeugzange I gezeigt. Da die Fig. 1a bis 1c sich auf die gleiche Ausführungsform beziehen, werden sie nachfolgend auch gemeinsam beschrieben. Die Fig. 1a zeigt dabei eine dreidimensionale Abbildung der Werkzeugzange 200 nach der Erfindung. Wie ersichtlich, ist ein Zangengrundkörper 1 vorgesehen, auf den ein Zangenklemmelement 2 aufgelegt und dort befestigt ist. Hierzu dienen beispielsweise die als Befestigungspunkte 51, 52 bezeichneten Schrauben. Mittels dieser Schrauben als Befestigungspunkte 51, 52 ist das Zangenklemmelement 2, welches wie weiter vorn beschrieben, aus einem eigenelastischen Material gebildet ist, an dem Zangengrundkörper 1 festgelegt. Der Zangengrundkörper 1 ist, wie ersichtlich, mit einer U-artigen Ausnehmung 4 versehen, wodurch außen zwei seitliche Stege 14, 15 entstehen, auf welchen das Zangenklemmelement 2 aufgelegt und in der gezeigten Ausführungsform festgelegt ist. Über dieser U-artigen Ausnehmung 4 ist eine Lasche 6 des Zangenklemmelementes 2 direkt angeordnet. Wird nun beispielsweise eine Kraft auf die Lasche 6 aufgebracht, hebt sich das dem in Einbaustellung dem Werkzeug I zugewandte Ende des Zangenklemmelementes 2 von dem Zangengrundkörper ab. Die Eigenelastizität reicht also aus, um diese Zangenklemmfunktion zu bewirken. Hier ist es nicht mehr notwendig, eine aufwendige Achse, beispielsweise in Form einer Wippe an der Werkzeugzange 200 vorzusehen, sondern die Eigenelastizität reicht aus, um über die Befestigungspunkte 51, 52 bzw. an der Kante der U-artigen Ausnehmung 4 die elastische Verformung zu bewirken. Der Zangengrundkörper 1 hat auf der in Einsatzstellung dem Werkzeug I gewandten Seite eine halb- bzw. drittelkreisartige Ausformung als Werkzeugaufnahme 3. Diese Werkzeugaufnahme 3 ist durch wenigstens ein - in der gezeigten Ausführungsform -durch zwei Positioniersegmente 31, 32 unterbrochen. Mit dem Bezugszeichen 33 ist die keilförmige Feder bezeichnet, die beim Eingreifen in das Werkzeug in eine dort vorhandene korrespondierend vorgesehene Umfangsnut 7 eingreift. Diese Umfangsnut 7 ist in der Fig. 1c gezeigt. Die Werkzeugaufnahme 3 ist im Schnitt betrachtet, nach außen bzw. in Einsatzstellung dem Werkzeug zugewandt, deshalb keilförmig auslaufend ausgebildet, um in der Werkzeughaltestellung in eine Umfangsnut 7 des Werkzeuges I eingreifen zu können. Das Zangenklemmelement 2 ist, wie ersichtlich, direkt auf den Zangengrundkörper 1 aufgelegt und dort mittels der Befestigungspunkte 51, 52 befestigt. Zum Festlegen der Werkzeugzange zum Beispiel an einem Werkzeugträger oder an einem Werkzeugmagazin sind noch die Befestigungsmittel 10 - hier als Schraube - abgebildet. Das Zangenklemmelement 2 hat auf der dem Werkzeug I zugewandten Seite eine C-förmig ausgebildete Spannmulde 20, deren äußere Enden 21, 22 hakenförmig ausgebildet sind, um in der Werkzeughaltestellung in Zentriernuten 81, 82 des Werkzeuges I eingreifen zu können. Des Weiteren ist eine Ausrichtekante 23 vorgesehen, die beim bestimmungsgemäßen Gebrauch in eine am Werkzeug vorgesehene Ausrichtecke 83 eingreift.

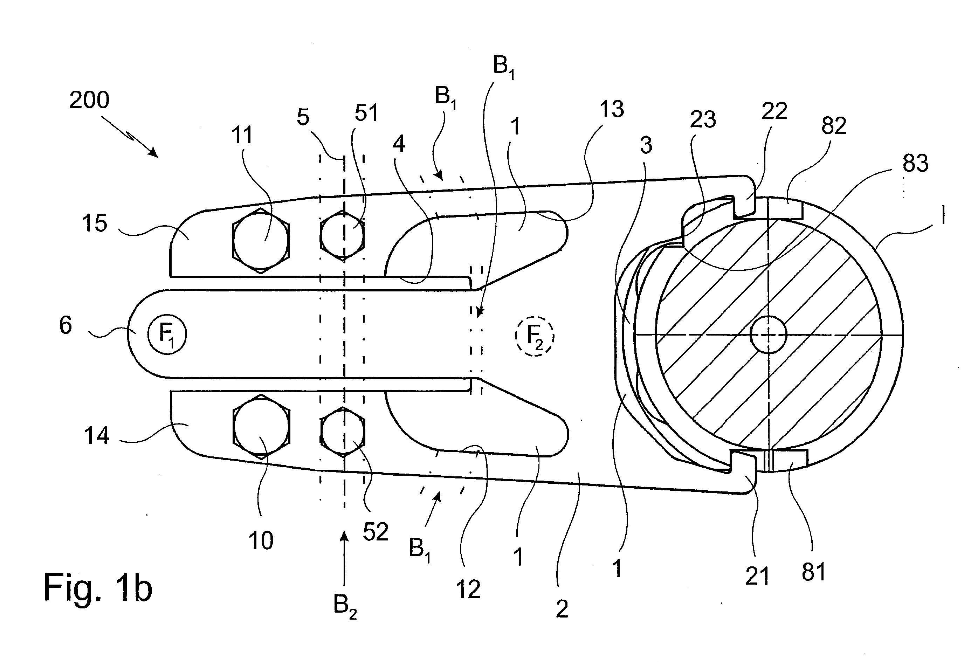

Die Fig. 1b zeigt die in der Fig. 1a bereits beschriebene Ausführungsform in Draufsicht. Ergänzend zu den bereits vorgestellten Bezugszeichen bzw. Elementen der erfindungsgemäßen Werkzeugzange 200 ist hier ersichtlich, dass das Zangenklemmelement 2 korrespondierend zu der U-artigen Ausnehmung 4 des Zangengrundkörpers geschlitzt ist. Dabei befinden sich auf der dem Werkzeug I zugewandten Seite des Zangenklemmelementes 2 Aufweitungen 12 bzw. 13, die die Elastizität des Zangenklemmelementes 2 insgesamt erhöhen. Die Lasche 6 des Zangenklemmelementes 2 ist genau korrespondierend zu dieser U-artigen Ausnehmung 4 des Zangengrundkörpers angeordnet. Wie ersichtlich, entsteht in etwa an der Kante der U-artigen Ausnehmung 4 des Zangengrundkörpers ein Biegebereich B1. Dieser Biegebereich B1 setzt sich an den außenliegenden Bereichen des Zangenklemmelementes 2 in Form des_hier schematisch angedeuteten Biegebereiches B1 fort. Somit wird hier ein Bereich bezeichnet, der beispielsweise durch Einwirken einer Kraft F1 von oben auf die Lasche 6 wirkt, wodurch sich das Zangenklemmelement 2 in dem genannten Bereich elastisch verformt. Mit dem Bezugszeichen 5 ist eine Linie bezeichnet, die durch die Befestigungspunkte 51, 52 führt. Dies bezeichnet eine weitere Biegelinie, die hier als Zangengelenk 5 bezeichnet ist. An dieser Biegelinie entsteht auch ein zweiter Biegebereich B2. Dieser ist mit gestrichelten Linien beidseitig des Zangengelenks 5 angedeutet._Das_Zangengelenk 5 ist beispielsweise dann in Wirkung, wenn wie in Fig. 1c gezeigt, eine Kraft F2 durch eine Durchdringungsöffnung 9 in dem Zangengrundkörper 1 wirkt. Dann wird sich das Material nicht, wie in Fig. 1b gezeigt, an oder in dem Biegebereich B1, B2 verformen, sondern an der als Zangengelenk 5 bezeichneten Linie bzw. in dem Biegebereich B2. Die anderen Bezugszeichen, wie beispielsweise die äußeren Ecken 21, 22 des Zangenklemmelementes 2, die in Zentriernuten 81, 82 des Werkzeuges I eingreifen, sind in dieser Ausführungsform der Fig. 1b besser ersichtlich. In der Fig. 1c als Schnittdarstellung der seitenansicht sind die Kräfte F1 bzw. F2 schematisch mit einem Pfeil angedeutet. Wirkt beispielsweise die Kraft F1 von oben auf das Zangenklemmelement 2 bzw. die Lasche 6, wird sich diese in Richtung a nach unten bewegen, wodurch das Zangenklemmelement mit der dem Werkzeug I zugewandten Seite in die Stellung 2' in Richtung des Doppelpfeils c bewegt wird. Mit 6' ist dabei die Lasche 6 in der nach unten in Richtung a bewegten Stellung gezeigt. Wirkt die Kraft F1 nicht mehr, bewegt sich die Lasche 6 wieder in Richtung b zurück in die normale Stellung. Wirkt nun die Kraft F2 durch die Durchdringungsöffnung 9 auf das Zangenklemmelement 2, wird ebenfalls das Zangenklemmelement 2 in Richtung c bewegt. Dabei ist diese Stellung wieder mit 2' bezeichnet. Demzufolge ist klar, dass die Werkzeugzange 200 nach der Erfindung sehr universell einsetzbar ist, so zum Beispiels aus zwei unterschiedlichen Richtungen mit Kraft beaufschlagbar ist. Am Werkzeug I, welches hier in einer geschnittenen Darstellung gezeigt ist, befindet sich eine Umfangsnut 7, in die die halb- bzw. drittelkreisartige Ausformung als Werkzeugaufnahme 3 eingreift. Dies ist in Fig. 1c sehr gut ersichtlich.

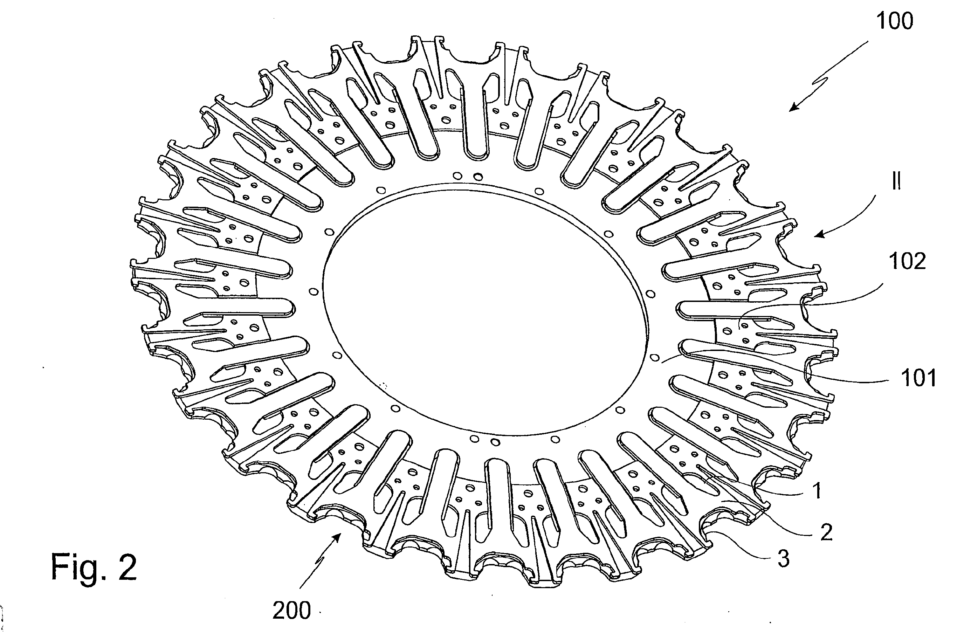

In Fig. 2 ist ein Werkzeugmagazin 100 bzw. ein Werkzeugwechsler II gezeigt. Die in der Fig. 2 vorgestellte Ausführungsform eignet sich demnach sowohl als Werkzeugwechsler, als auch als Werkzeugmagazin. Die hier gewählte scheibenartige Ausgestaltung des Werkzeugmagazins 100 ist dadurch gekennzeichnet, dass die Werkzeugzangen 200 sozusagen durch Ausformen bzw. Herausschneiden der notwendigen Elemente des Zangenklemmelementes 2 aus einer Deckplatte als Zangenklemmelementeplatte 102 entstehen bzw. gebildet werden. Die Deckplatte beziehungsweise als Zangenklemmelementeplatte 102 ist beispielsweise aus elastischem Material gefertigt und auf den Zangengrundkörpern der Zangengrundkörperplatte 101 angeordnet, wobei diese beiden Platten dann deckungsgleich übereinander gelegt werden. Wie ersichtlich, besitzen die Werkzeugzangen 200 die gleiche Ausgestaltung, wie in den vorhergehenden Figuren beschrieben. Somit kann auf eine erneute Vorstellung der bereits vorgestellten Elemente verzichtet werden. In den Werkzeugzangen 200 kann man beispielsweise eine Vielzahl von Werkzeugen entnehmbar vorhalten. Dabei besteht das Werkzeugmagazin 100 bzw. der Werkzeugwechsler II aus einer Zangengrundkörperplatte 101 und einer Zangenklemmelementeplatte 102. Diese sind derat zueinander angeordnet und verbunden, dass sich hier eine Vielzahl von Werkzeugzangen 200 ergibt.

Eine nichtgezeigte Ausführungsform für ein Werkzeugmagazin beziehungsweise einen Werkzeugwechsler ist so ausgebildet, dass die Zangengrundkörperplatte zunächst eine Vielzahl von Zangengrundkörpern aufweist, die durch Ausformungen entstanden sind. Natürlich reicht es aus, wenn beispielsweise ein einziger Zangengrundkörper auf der Zangengrundkörperplatte 101 ausgeformt ist. Auf diesem Zangengrundkörper 1 beziehungsweise auf den Zangengrundkörpern 1 insgesamt ist dann eine Vielzahl von Zangenklemmelementen 2 vorgesehen. Dabei wird jedes Zangenklemmelement 2 auf der Zangengrundkörperplatte korrespondierend zum ausgeformten Zangengrundkörper 1 angeordnet. Der Vorteil einer solchen Ausgestaltung ist dadurch angegeben, dass hier eine einzelne Austauschbarkeit der höherbelasteten Zangenklemmelemente 2 möglich ist. Dadurch wird die gesamten Universalität des Werkzeugwechslers beziehungsweise des Werkzeugmagazines noch weiter erhöht.

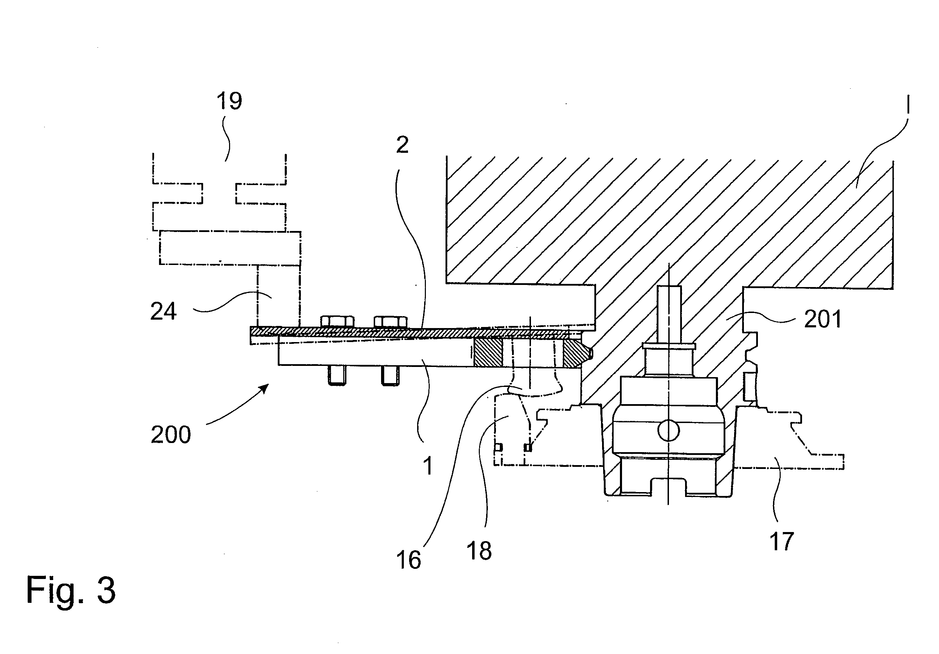

Fig. 3 zeigt eine schematische Darstellung der Anordnung eine Werkzeugzange nach der Erfindung an einem Spindelkopf einer Werkzeugmaschine in Seitenansicht. Auch in dieser Figur werden die Bezugszeichen, wie sie bereits vorgestellt wurden, in gleicher Weise verwendet. Demzufolge ist die Werkzeugzange 200 schematisch angedeutet. Die Werkzeugzange 200 besteht aus dem Zangengrundkörper 1 und dem Zangenklemmelement 2. Das Werkzeug I ist in der Darstellung in der Werkzeugzange 200 festgelegt. Dabei ist an dem Werkzeug ein Werkzeughalter als sogenannter Hohlschaftkegel vorgesehen, der bereits an einem Spindelkopf 17 festgelegt ist. An dem Zangenklemmelement ist in dieser Darstellung erstmalig eine Nocke 16 angeordnet, die mit einem zweiten Betätiger 18, der an dem Spindelkopf angeordnet ist, zusammenwirkt. Das heißt, beim Betätigen des zweiten Betätigers 18 wird das Zangenklemmelement 2, wie mit der gestrichelten Linie angedeutet, angehoben und so kann das Werkzeug I freigegeben werden. Dies ist allerdings nur eine Variante der erfindungsgesmäßen Ausführungsform bzw. Anordnung der Werkzeugzange 200 in einer Werkzeugmaschine. Beispielsweise kann der zweite Betätiger 18 aktiv oder auch inaktiv wirken. Im Falle einer inaktiven Ausgestaltung muss die Bewegungs- und Kraftkomponente durch die Verstellbewegung der Werkzeugzange 200 selbst bzw. deren nicht gezeigten Antrieb erfolgen. Die Bewegungskomponente kann jedoch auch durch den Spindelkopf 17 bzw. den daran angeordneten zweiten Betätiger 18 erfolgen. Auf der linken Seite der Darstellung in Fig. 3 ist ein Pneumatikzylinder 19 schematisch angedeutet. An diesem Pneumatikzylinder 19 ist ein erster Betätiger 24 angeordnet, der in Einbaustellung von oben auf das Zangenklemmelement 2 wirkt, wodurch ebenfalls das dem Werkzeug I zugewandte Ende des Zangenklemmelementes 2 angehoben wird, wie mit der gestrichelten Linie dargestellt. Der erste Betätiger 24 ist in der nur schematisch angedeuteten Ausführungsform beispielsweise als Ende eines Pneumatikkolbens des Pneumatikzylinders 19 ausgebildet. Dabei ist der Pneumatikzylinder so vorgesehen, dass er auf das Zangenklemmelement aktiv wirkt. Allerdings ist auch hier eine Ausgestaltung möglich, bei der eine Anlage oder ein Anlageelement in der Werkzeugmaschine derart angeordnet ist, dass man durch Anfahren der Werkzeugzange mit dem Zangenklemmelement 2 die gewünschte Verstellbewegung dieses Zangenklemmelementes 2 erreicht. Nach der Erfindung ist selbstverständlich auch vorgesehen, anstelle von Pneumatikzylindern gegebenenfalls hydraulische, elektromechanische oder elektrische Verstellelemente zu verwenden, wenn dies für die Herstellung der gesamten Werkzeugmaschine von Vorteil ist.

## Patentansprüche

1. Werkzeugzange (200), welche für das lösbare Halten eines Werkzeuges (I) in einer Werkzeugmaschine vorgesehen ist, wobei die Werkzeugzange (200) von einem Zangengrundkörper (1) und einem mit diesem zusammenwirkenden, mit dem Zangengrundkörper verbundenen Zangenklemmelement (2) gebildet ist und die Werkzeugzange (200) eine Werkzeughaltestellung und eine Werkzeugwechselstellung aufweist, wobei in der Werkzeughaltestellung der Zangengrundkörper (1) und das Zangenklemmelement (2) an Greifelementen des Werkzeuges (I) dieses klemmend halten und in der Werkzeugwechselstellung das Zangenklemmelement (2) das Werkzeug (I) freigibt, wobei der Zangengrundkörper (1) und/oder das Zangenklemmelement (2) aus einem eigenelastischen Flachmaterial oder plattenförmigen eigenelastischen Material, wie zum Beispiel einem Stahlblech gebildet ist/sind, wobei das Zangenklemmelement (2) auf den Zangengrundkörper (1) aufgelegt und dort befestigt ist und wobei eine elastische Verformung des Zangenklemmelementes (2) zur Freigabe und zum Klemmen des Werkzeuges (I) vorgesehen ist, **dadurch gekennzeichnet, dass** durch Eintragen einer Kraft (F₁, F₂) auf das Zangenklemmelement (2) gegen die Elastizität des Zangenklemmelementes (2) das dem Werkzeug (I) zugewandte Ende des Zangenklemmelementes (2) vom Zangengrundkörper (1) durch Verschwenken des Zangenklemmelementes (2) um eine sich rechtwinklig zu einer Werkzeuglängsachse erstreckenden Verschwenkachse entfernbar ist, wobei die Werkzeugzange die Werkzeugwechselstellung einnimmt, und aufgrund der Eigenelastizität des Zangenklemmelementes bei Wegfallen der Kraft (F₁, F₂) die Werkzeughaltestellung einstellbar oder das Zangenklemmelement (2) auf den Zangengrundkörper (1) zu bewegbar ist.

2. Werkzeugzange nach Anspruch 1, **dadurch gekennzeichnet, dass** das Zangenklemmelement (2) aus einem Federstahl gebildet ist.

3. Werkzeugzange nach einem der vorhergehenden Ansprüche, **dadurch gekennzeichnet, dass** an dem Zangenklemmelement (2) ein, bevorzugt zwei Biegebereich(e) (B1, B2) vorgesehen ist/sind, in dem sich das Zangenklemmelement (2) bei Beaufschlagung mit der Kraft (F₁, F₂) elastisch verformt.

4. Werkzeugzange nach Anspruch 3, **dadurch gekennzeichnet, dass** der oder die Biegebereiche (B1, B2) sich rechtwinklig zur Längsachse (L) des Werkzeuges erstreck(t)en.

5. Werkzeugzange nach einem der vorhergehenden Ansprüche, **dadurch gekennzeichnet, dass** die Werkzeugwechselstellung durch die Beaufschlagung bzw. das Angreifen der Kraft (F₁, F₂) aktiv einstellbar bzw. erreichbar ist und die Werkzeughaltestellung im nicht mit der Kraft (F₁, F₂) beaufschlagten Zustand sich automatisch einstellt, wobei insbesondere wenigstens ein Antrieb für das Erzeugen der Kraft (F₁, F₂) vorgesehen ist und wobei insbesondere bevorzugt das Werkzeug (I) in der Werkzeughaltestellung formschlüssig in der Werkzeugzange (200) gehalten und dadurch nicht aus der Werkzeugzange (200) lösbar ist.

6. Werkzeugzange nach einem der vorhergehenden Ansprüche, **dadurch gekennzeichnet, dass** zur Erzeugung der Kraft (F₁, F₂) wenigstens ein Betätiger, insbesondere ein Hydraulik- oder Pneumatikzylinder, ein elektromechanischer Antrieb oder ein Linearantrieb vorgesehen ist, wobei bevorzugt ein erster Betätiger (24) an dem Hydraulik- oder Pneumatikzylinder (19) als Antrieb zur Erzeugung der Kraft (F₁, F₂) und ein zweiter Betätiger (18) an der Spindel bzw. dem Spindelkopf (17) der Werkzeugmaschine vorgesehen ist, um mit einer Nocke (16), die am Zangenklemmelement (2) angeordnet ist, als Antrieb zur Erzeugung der Kraft (F₁, F₂) zusammenzuwirken.

7. Werkzeugzange nach einem der vorhergehenden Ansprüche, **dadurch gekennzeichnet, dass** der Zangengrundkörper (1) eine größere Materialstärke, insbesondere eine drei bis fünf Mal so große Materialstärke, bevorzugt viermal so große Materialstärke aufweist wie das Zangenklemmelement (2) und/oder der Zangengrundkörper (1) und/oder der Zangengrundkörper (1) an der zum Werkzeug (I) zugewandten Seite eine halb- bzw. drittelkreisartige Ausformung als Werkzeugaufnahme (3) aufweist, die durch wenigstens ein, bevorzugt zwei Positioniersegment(e) (31,32) unterbrochen ist/sind.

8. Werkzeugzange nach einem der vorhergehenden Ansprüche, **dadurch gekennzeichnet, dass** der Zangengrundkörper (1) an der zum Werkzeug (I) zugewandten Seite eine halb- bzw. drittelkreisartige Ausformung als Werkzeugaufnahme (3) aufweist und die Werkzeugaufnahme (3) im Schnitt betrachtet keilförmig nach außen bzw. in Einsatzstellung dem Werkzeug zugewandt auslaufend ausgebildet ist, um in der Werkzeughaltestellung in eine Umfangsnut (7) des Werkzeuges (I) eingreifbar zu sein und/oder das Zangenklemmelement (2) in mindestens einem Befestigungspunkt (51,52) am Zangengrundkörper (1) gelagert ist und/ oder der Zangengrundkörper (1) auf der vom Werkzeug abgewandten Seite eine U-artige Ausnehmung (4) aufweist, wodurch außen zwei seitliche Stege (14, 15) gebildet sind, wobei zumindest ein Steg einen Befestigungspunkt bildet und/oder ein Zangengelenk (5) durch wenigstens je einen Befestigungspunkt (51, 52) an den Stegen (14, 15) des Zangengrundkörpers (1) gebildet ist und/oder das Zangenklemmelement (2) im montierten Zustand vorzugsweise genau korrespondierend zu den Kanten der U-artigen Ausnehmung (4) des Zangengrundkörpers (1) geschlitzt ist, so dass mittig eine Lasche (6) gebildet ist, die im Bereich der U-artigen Ausnehmung (4) angeordnet ist.

9. Werkzeugzange nach Anspruch 8 **gekennzeichnet durch** das Einwirken der Kraft (F₁, F₂) auf die Lasche, die die Lasche in die U-förmige Ausnehmung verstellt, wodurch sich das Zangenklemmelement (2) um eine Biegekante in dem ersten und/oder zweiten Biegebereich (B1, B2) derart elastisch verformt, dass sich das dem Werkzeug zugewandte Ende des Zangenklemmelementes (2) vom Zangengrundkörper (1) entfernt und/oder **dadurch**, dass an dem Zangengrundkörper (1) zwischen der Werkzeugaufnahme und dem Befestigungspunkt mindestens eine Durchdringungsöffnung (9) vorgesehen ist, die einseitig von dem Zangenklemmelement verdeckt ist und die Kraft (F₁, F₂) **durch** die Durchdringungsöffnung (9) auf das Zangenklemmelement (2) wirkt, wodurch sich das Zangenklemmelement (2) um eine weitere Biegekante bzw. in dem zweiten Biegebereich (B2) derart elastisch verformt, dass sich das dem Werkzeug (I) zugewandte Ende des Zangenklemmelementes (2) vom Zangengrundkörper (1) entfernt und/oder die Wirkrichtungen der Kraft (F₁, F₂) entgegengerichtet sind.

10. Werkzeugzange nach einem der vorhergehenden Ansprüche, **dadurch gekennzeichnet, dass** das Zangenklemmelement (2) an der zum Werkzeug (I) zugewandten Seite eine c-förmig ausgebildete Spannmulde (20) aufweist, deren äußere Enden (21, 22) hakenförmig ausgebildet sind, die in der Werkzeughaltestellung in Zentriernuten (81, 82) des Werkzeuges (I) eingreifen und/oder an dem Zangenklemmelement (2) wenigstens eine Ausrichtkante (23) vorgesehen ist, die beim bestimmungsgemäßen Gebrauch in eine am Werkzeug (I) vorgesehene Ausrichtecke (83) eingreift und/oder das Werkzeug (I) als spanabhebendes Werkzeug oder als Mess - und/oder Tastwerkzeug ausgebildet ist.

11. Werkzeugwechsler für das Einsetzen eines Werkzeuges (I) in oder das Entfernen eines Werkzeuges (I) aus einer Aufnahme, zum Beispiel der Werkzeugaufnahme der Arbeitsspindel einer Werkzeugmaschine, wobei der Werkzeugwechsler (II) mindestens eine Werkzeugzange (200) nach einem der vorgehenden Ansprüche aufweist und ein gesteuerter Antrieb für das Positionieren der Werkzeugzange an der Arbeitsspindel vorgesehen ist.

12. Werkzeugmagazin, in welchem eine Vielzahl von Werkzeugen (I) entnehmbar vorhaltbar ist, wobei das Werkzeugmagazin (100) mindestens zwei Werkzeugzangen (200) nach einem der Ansprüche 1 bis 10 aufweist.

13. Werkzeugmagazin nach Anspruch 12, **dadurch gekennzeichnet, dass** ein Zangenträger, insbesondere eine Trägerplatte oder ein/e umlaufende/s Band oder Kette vorgesehen ist, das/die eine Vielzahl einzelner, jeweils unabhängig voneinander angeordneter Werkzeugzangen (200) trägt und/oder das Werkzeugmagazin (100) eine Zangengrundkörperplatte (101) aufweist, auf der einstückig mindestens zwei Zangengrundkörper (1) angeordnet sind, und das Werkzeugmagazin (100) eine Zangenklemmelementenplatte (102) aufweist, auf der einstückig mindestens zwei Zangenklemmelemente (2) angeordnet sind und die Zangengrundkörperplatte (101) und die Zangenklemmelementeplatte (102) derart zueinander angeordnet und verbunden sind, dass sich zumindest zwei Werkzeugzangen (200) ergeben.

14. Werkzeugmagazin nach einem der vorhergehenden Ansprüche 12 und 13, **dadurch gekennzeichnet, dass** die Zangengrundkörperplatte (101) und die Zangenklemmelementeplatte (102) konturähnlich ausgebildet sind und/ oder die Zangengrundkörperplatte (101) und die Zangenklemmelementeplatte (102) ring- oder scheibenartig ausgebildet sind und/oder die Zangengrundkörperplatte (101) und die Zangenklemmelementeplatte (102) aus plattenförmigem, jeweils gleichdickem Material besteht, aus welchem die einzelnen Zangengrundkörper (1) beziehungsweise Zangenklemmelemente (2) durch schneid-, stanz- oder spanabhebende Bearbeitung herausgearbeitet sind.

15. Werkzeugmagazin nach einem der vorhergehenden Ansprüche 12 bis 14, **dadurch gekennzeichnet, dass** die Zangengrundkörperplatte (101) eine Vielzahl von Zangenklemmelementen (2) trägt, wobei bevorzugt die Zangengrundkörperplatte (101) konturähnlich ausgebildet ist, sodass wenigstens ein, bevorzugt eine Vielzahl von Zangengrundkörper (1) ausgeformt sind, wenigstens ein, bevorzugt eine Vielzahl von einzelnen Zangenklemmelement (2) auf der Zangengrundkörperplatte (101) deckungsgleich beziehungsweise korrespondierend auf den ausgeformten Zangengrundkörpern (1) befestigt ist/sind, sodass eine oder mehrere Werkzeugzange (200) gebildet ist/sind und/oder als Befestigungsmittel zur lösbar, festen Festlegung der Befestigungspunkte (51, 52) je eine Schraube, ein Bolzen oder dergleichen vorgesehen ist und/oder eine jeweils einzelne Austauschbarkeit des beziehungsweise der Zangenklemmelemente (2) besteht.

## Claims

1. Tool gripper (200) provided for the releasable holding of a tool (I) in a machine tool, wherein the tool gripper (200) is formed by a basic gripper element (1) and a clamping gripper element (2) interacting therewith and connected with the basic gripper element, and the tool gripper (200) has a tool holding position and a tool changing position, wherein in the tool holding position the basic gripper element (1) and the clamping gripper element (2) clampingly hold the tool (I) at gripper elements of the tool (I), and in the tool changing position the clamping gripper element (2) releases the tool (I), wherein the basic gripper element (1) and/or the clamping gripper element (2) is formed of an inherent elastic flat material or plate-like inherent elastic material, such as for example a steel sheet, wherein the clamping gripper element (2) rests on the basic gripper element (1) is fastened thereto, and wherein an elastic deformation of the clamping gripper element (2) is provided for releasing and clamping the tool (I), **characterized in that** by applying a force (F1, F2) on the clamping gripper element (2) against the elasticity of the clamping gripper element (2) the end of the clamping gripper element (2) facing the tool (I) can be removed from the basic gripper element (1) by swiveling the clamping gripper element (2) around a swiveling axis extending rectangularly to a longitudinal tool axis, wherein the tool gripper takes the tool changing position, and because of the inherent elasticity of the clamping gripper element when the force (F1, F2) is deleted the tool holding position can be set, or the clamping gripper element (2) can be moved towards the basic gripper element (1).

2. Tool gripper according to claim 1, **characterized in that** the clamping gripper element (2) is formed of a spring steel.

3. Tool gripper according to one of the preceding claims, **characterized in that** at the clamping gripper element (2) one, preferably two bending area(s) (B1, B2) is/are provided where the clamping gripper element (2) deforms elastically when the force (F1, F2) is applied.

4. Tool gripper according to claim 3, **characterized in that** the bending area(s) (B1, B2) extend(s) rectangularly to the longitudinal axis (L) of the tool.

5. Tool gripper according to one of the preceding claims, **characterized in that** the tool changing position can be actively set and/or reached by applying and/or engaging the force (F1, F2), and the tool holding position is automatically set in the condition when no force (F1, F2) is applied, wherein in particular at least one drive is provided for generating the force (F1, F2), and wherein in particular preferred the tool (I) is held form-fitting in the tool holding position in the tool gripper (200) and thus cannot be released from the tool gripper (200).

6. Tool gripper according to one of the preceding claims, **characterized in that** in order to generate the force (F1, F2) at least one actuator, in particular a hydraulic or pneumatic cylinder, an electro-mechanic drive or a linear actuator is provided, wherein preferably a first actuator (24) is provided at the hydraulic or pneumatic cylinder (19) as drive for generating the force (F1, F2), and a second actuator (18) is provided at the spindle and/or the spindle head (17) of the machine tool for interacting as drive for generating the force (F1, F2) with a cam (16) arranged at the clamping gripper element (2).

7. Tool gripper according to one of the preceding claims, **characterized in that** the basic gripper element (1) shows a larger thickness of material, in particular a material thickness that is three to five times larger, preferably four times larger than the clamping gripper element (2) and/or the basic gripper element (1), and/or the basic gripper element (1) has on the side facing the tool (I) a semi-circle- or one-third-of-circle shaping as tool holder (3) interrupted by at least one, preferably two position segment(s) (31, 32).

8. Tool gripper according to one of the preceding claims, **characterized in that** the basic gripper element (1) has on the side facing the tool (I) a semi-circle or one-third-of-circle shaping as tool holder (3), and the tool holder (3) is formed, seen in section, tapering wedge-like outwards and/or facing the tool in working position so it can engage in a circumference groove (7) of the tool (I) in the tool holding position, and/or the clamping gripper element (2) is supported at the basic gripper element (1) in at least one attachment spot (51, 52), and/or the basic gripper element (1) has a U-shaped recess (4) on the side opposite the tool, so that on the outside two lateral webs (14, 15) are formed, at least one web forming an attachment spot, and/or a gripper joint (5) is formed by at least one attachment spot (51, 52) each at the webs (14, 15) of the basic gripper element (1), and/or the clamping gripper element (2) is slotted in assembled position preferably exactly corresponding with the edges of the U-shaped recess (4) of the basic gripper element (1), so that in the center a flap (6) is formed arranged in the area of the U-shaped recess (4).

9. Tool gripper according to claim 8, **characterized by** the application of the force (F1, F2) on the flap adjusting the flap in the U-shaped recess so that the clamping gripper element (2) is elastically deformed around a folding edge in the first and/or second folding area (B1, B2) in such a way that the end of the clamping gripper element (2) facing the tool moves away from the basic gripper element (1), and/or in that at the basic gripper element (1) between the tool holder and the attachment spot at least one penetration opening (9) is provided that is covered on one side by the clamping gripper element, and the force (F1, F2) acts on the clamping gripper element (2) through the penetration opening (9) so that the clamping gripper element (2) is deformed elastically around another folding edge and/or in the second bending area (B2) in such a way that the end of the clamping gripper element (2) facing the tool (I) moves away from the basic gripper element (1), and/or the operative directions of the force (F1, F2) act in opposite directions.

10. Tool gripper according to one of the preceding claims, **characterized in that** the clamping gripper element (2) has a C-shaped clamping depression (20) on the side facing the tool (I), the outer ends (21, 22) of the depression being designed hook-like and engaging in centering grooves (81, 82) of the tool (I) in the tool holding position, and/or at the clamping gripper element (2) at least one alignment edge (23) is provided engaging, when employed as intended, in an alignment corner (83) provided at the tool (I), and/or the tool (I) is configured as metal-cutting tool or as measuring and/or tactile tool.

11. Tool changer for inserting a tool (I) in or removing a tool (I) from a holder, for example a tool holder of the working spindle of a machine tool, wherein the tool changer (II) has at least one tool gripper (200) according to one of the preceding claims, and a controlled drive is provided for the positioning of the tool gripper at the working spindle.

12. Tool magazine in which a multitude of tools (I) can be supplied removably, wherein the tool magazine (100) has at least two tool grippers (200) according to one of the claims 1 to 10.

13. Tool magazine according to claim 12, **characterized in that** a gripper carrier, in particular a carrier plate or a circulating tape or chain is provided carrying a multitude of single, each time independently arranged tool grippers (200), and/or the tool magazine (100) has a basic gripper element plate (101) on which at least two basic gripper elements (1) are arranged in one piece, and the tool magazine (100) has a clamping gripper element plate (102) on which at least two clamping gripper elements (2) are arranged in one piece, and the basic gripper element plate (101) and the clamping gripper element plate (102) are arranged to and connected with each other such that at least two tool grippers (200) are formed.

14. Tool magazine according to one of the preceding claims 12 and 13, **characterized in that** the basic gripper element plate (101) and the clamping gripper element plate (102) are designed contour-like, and/or the basic gripper element plate (101) and the clamping gripper element plate (102) are designed ring- or disc-like, and/or the basic gripper element plate (101) and the clamping gripper element plate (102) consist of plate-like, each time identically thick material from which the single basic gripper elements (1) and/or clamping gripper elements (2) are worked out by cutting, punching or metal-cutting machining.

15. Tool magazine according to one of the preceding claims 12 to 14, **characterized in that** the basic gripper element plate (101) carries a multitude of clamping gripper elements (2), wherein preferably the basic gripper elements plate (101) is designed contour-like so that at least one, preferably a multitude of basic gripper elements (1) is formed, at least one, preferably a multitude of single clamping gripper elements (2) is attached congruently and/or correspondingly to the basic gripper element plate (101) to the formed basic gripper elements (1) so that one or more tool grippers (200) is/are formed, and/or as fastening means for releasable, fixed definition of the attachment spots (15, 52) one screw each, one bolt each or the like is provided, and/or there is a separate exchange each of the clamping gripper element(s) (2).

## Revendications

1. Pince pour outils (200) destinée à maintenir de façon amovible un outil (I) à l'intérieur d'une machine-outil de façon à ce que la pince pour outils (200) est formée par un élément de base (1) de la pince et par un élément de serrage (2) de la pince interagissant avec l'élément de base de la pince et également liée à celui-ci la pince pour outils (200) comportant une position de maintien de l'outil et une position de changement de l'outil de façon à ce qu'en position de maintien de l'outil, l'élément de base (1) de la pince et l'élément de serrage (2) de la pince maintiennent l'outil (I) en le serrant au niveau d'éléments de serrage, et en position de changement de l'outil, l'élément de serrage (2) de la pince libère l'outil (I) de façon à ce que l'élément de base (1) de la pince et/ou l'élément de serrage (2) de la pince sont/est formé(s) en un matériau plat intrinsèquement élastique ou en un matériau plan intrinsèquement élastique tel qu'une lame en acier et de façon à ce que l'élément de serrage (2) de la pince est posé et fixé sur l'élément de base (1) de pince avec la possibilité prévue d'une déformation élastique de l'élément de serrage (2) de la pince permettant de libérer et de serrer l'outil (I), **caractérisée en ce qu'**en appliquant une force (F1, F2) sur l'élément de serrage (2) de la pince contre l'élasticité de l'élément de serrage (2) de la pince l'extrémité de l'élément de serrage (2) de la pince à proximité de l'outil (I) peut être séparé de l'élément de base (1) de la pince par un pivotement de l'élément de serrage (2) de pince autour d'un axe de pivotement perpendiculaire à un axe longitudinal de l'outil de façon à ce que la pince pour outils est située dans la position de changement de l'outil et **en ce qu'**en enlevant la force (F1, F2) et en raison de l'élasticité intrinsèque de l'élément de serrage (2) de la pince la position de maintien de l'outil peut être ajustée ou l'élément de serrage (2) de la pince peut être déplacé vers l'élément de base (1) de la pince.

2. Pince pour outils selon la revendication 1, **caractérisée en ce que** l'élément de serrage (2) de la pince est formé dans un acier à ressorts.

3. Pince pour outils selon l'une des deux revendications précédentes, **caractérisée en ce qu'**une zone de flexion et de préférence deux zones de flexion (B1, B2) est(sont) prévue(s) au niveau de l'élément de serrage (2) de la pince permettant à l'élément de serrage (2) de la pince de se déformer de façon élastique lors de l'application de la force (F1, F2).

4. Pince pour outils selon la revendication 3, **caractérisée en ce que** la ou les zones de flexion (B1, B2) s'étendent selon une direction perpendiculaire à l'axe longitudinal (L) de l'outil.

5. Pince pour outils selon une des revendications précédentes, **caractérisée en ce que** la position de changement de l'outil peut être activement ajustée et atteinte par l'application de la force (F1, F2) et **en ce que** la position de maintien de l'outil est atteinte automatiquement lorsque la force (F1, F2) n'est pas appliquée et **en ce qu'**en particulier au moins une commande permettant de générer la force (F1, F2) est prévue et **en ce que** de préférence l'outil (I) est maintenu sans jeu dans la position de maintien de l'outil à l'intérieur de la pince pour outils (200) et ne peut ainsi pas sortir de la pince pour outils (200).

6. Pince pout outils selon une des revendications précédentes, **caractérisée en ce qu'**au moins un actionneur, en particulier un vérin hydraulique ou pneumatique, une commande électromécanique ou un moteur linéaire est prévu pour générer la force (F1, F2) et **en ce que** de préférence un premier actionneur (24) est prévu au niveau du vérin hydraulique ou pneumatique (19) comme commande génératrice de la force (F1, F2) et un deuxième actionneur (18) est prévu comme commande génératrice de la force (F1, F2) au niveau de la broche ou du mandrin (17) de la machine-outil interagissant avec un nez (16) situé au niveau de l'élément de serrage (2) de la pince.

7. Pince pour outils selon une des revendications précédentes, **caractérisée en ce que** par rapport à l'élément de serrage (2) de la pince, l'élément de base (1) de la pince possède une épaisseur de matériau plus grande, en particulier une épaisseur de matériau trois à cinq fois plus grande, de préférence une épaisseur de matériau quatre fois plus grande et/ou **en ce que** l'élément de base (1) de la pince et/ou **en ce que** l'élément de base (1) de la pince possède à l'extrémité à proximité de l'outil (I) une découpe (3) en forme de demi-cercle ou d'un tiers de cercle comme moyen de réception de l'outil interrompue par un ou, de préférence, deux segments de positionnement (31, 32).

8. Pince pour outils selon une des revendications précédentes, **caractérisée en ce que** l'élément de base (1) de la pince comporte une découpe en forme de demi-cercle ou de tiers de cercle comme moyen de réception (3) de l'outil et **en ce que** le moyen de réception d'outil (3) possède une section de coin d'une épaisseur moindre à l'extrémité, c'est-à-dire à l'endroit faisant en état d'utilisation d'un outil face à cet outil afin de pouvoir rentrer en état de maintien d'un outil dans une gorge périphérique (7) de l'outil (I) et/ou **en ce que** l'élément de serrage (2) de la pince est maintenu articulé en au moins un point de fixation (51, 52) au niveau de l'élément de base (1) de la pince et/ou **en ce que** l'élément de base (1) de la pince possède une découpe (4) en forme de « U » sur sa face opposée à l'outil créant vers l'extérieur deux languettes latérales (14, 15) avec au moins une languette formant un point de fixation et/ou **en ce qu'**une articulation de pince (5) est formée par au moins chacun des points de fixation (51, 52) au niveau des languettes (14, 15) de l'élément de base (1) de la pince et/ou **en ce que** l'élément de serrage (2) de la pince possède des fentes correspondantes à l'état monté de préférence exactement aux bords de la découpe en forme de « U » (4) de l'élément de base (1) de la pince afin de produire de façon centrée un languette (6) situé au niveau de la découpe en forme de « U ».

9. Pince pour outils selon la revendication 8, **caractérisée par** l'application de la force (F1, F2) sur la languette déplaçant cette languette vers la découpe en forme de « U » provoquant une déformation élastique de l'élément de serrage (2) de la pince autour d'une arête de flexion située dans la première et/ou dans la deuxième zone de flexion (B1, B2) de façon à ce que l'extrémité de l'élément de serrage (2) de la pince faisant face à l'outil s'éloigne de l'élément de base (1) de la pince et/ou en ce qu'au moins une ouverture traversante (9), cachée sur un côté par l'élément de serrage de la pince, est située au niveau de l'élément de base (1) de la pince entre le moyen de réception (3) de l'outil et le point de fixation avec la force (F1, F2) agissant à travers l'ouverture traversante (9) sur l'élément de serrage (2) de la pince déformant ainsi l'élément de serrage (2) de la pince autour d'une arête de flexion ou zone de flexion (B2) supplémentaire de façon à ce que l'extrémité de l'élément de serrage (2) de la pince faisant face à l'outil (I) s'éloigne de l'élément de base (1) de la pince et/ou en ce que les directions d'effet de la force (F1, F2) sont opposées.

10. Pince pour outils selon une des revendications précédentes, **caractérisée en ce que** l'élément de serrage (2) de la pince possède à son côté faisant face à l'outil un creux de serrage (20) en forme de « C » dont les extrémités extérieures (21, 22) possèdent des formes de crochets rentrant, en position de maintien de l'outil, dans des gorges de centrage (81, 82) de l'outil (I) et/ou **en ce qu'**au moins un bord d'alignement (23) est prévu au niveau de l'élément de serrage (2) de la pince interagissant dans une utilisation conforme avec un coin d'alignement (83) prévu au niveau de l'outil (I) et/ou **en ce que** l'outil (I) est configuré comme un outil enlevant de la matière ou comme un outil de mesure ou un capteur.

11. Changeur d'outil pour l'insertion ou l'enlèvement d'un outil (I) d'un moyen de réception d'outil, par exemple le moyen de réception d'outil d'un arbre de rotation d'une machine-outil configurée de façon à ce que le changeur d'outil (II) comporte au moins une pince pour outils (200) selon une des revendications précédentes et en ce qu'une commande pilotée est prévue pour le positionnement de la pince pour outils par rapport à l'arbre de rotation.

12. Magasin d'outils pouvant stocker une multitude d'outils amovibles (I) de façon à ce que le magasin d'outils (100) comporte au moins deux pinces pour outils (200) selon une des revendications précédentes 1 à 10.

13. Magasin d'outils selon la revendication 12, **caractérisé en ce qu'**un support de pince, en particulier une plaque de support ou une courroie ou une chaîne sans fin sont prévues portant cette multitude de pinces d'outils (200) individuelles et situées l'une indépendamment de l'autre et/ou **en ce que** le magasin d'outils (100) comporte une plaque de base (101) pour les pinces sur laquelle sont situés au moins deux éléments de base (1) de la pince réunis en une seule pièce et **en ce que** le magasin d'outils (100) comporte une plaque d'éléments de serrage (102) pour les pinces sur laquelle sont situés au moins deux éléments de serrage (2) de la pince réunis en une seule pièce et **en ce que** la plaque de base (101) pour les pinces et la plaque d'éléments de serrage (102) pour les pinces sont situées et liées l'une par rapport à l'autre de façon à produire au moins deux pinces d'outils (200).

14. Magasin d'outils selon une des revendications précédentes 12 ou 13, **caractérisé en ce que** la plaque de base (101) pour les pinces et la plaque d'éléments de serrage (102) pour les pinces possèdent des contours similaires et/ou **en ce que** la plaque de base (101) pour les pinces et la plaque d'éléments de serrage (102) pour les pinces possèdent des formes d'anneau ou de disque et/ou **en ce que** la plaque de base (101) pour les pinces et la plaque d'éléments de serrage (102) pour les pinces sont produites à partir de matériaux en forme de plaque d'épaisseur constante permettant de réaliser les éléments de base (1) de la pince et les éléments de serrage (2) individuels de la pince à l'aide d'un procédé de découpe, d'emboutissage ou d'usinage avec des outils prélevant de la matière.

15. Magasin d'outils selon une des revendications précédentes 12 à 14, **caractérisé en ce que** la plaque de base (101) pour les pinces possède une multitude d'éléments de serrage (2) de la pince de contours similaires permettant de réaliser au moins un, mais de préférence une multitude d'éléments de base (1) de la pince et au moins un, mais de préférence une multitude d'éléments de serrage (2) individuels de la pince fixés sur la plaque de base (1) de la pince et couvrant ou correspondant aux éléments de base (1) de la pince afin de créer une ou plusieurs pinces pour outils (200) et/ou **en ce qu'**une vis, un boulon ou un élément similaire est prévu comme moyen de fixation pour la réalisation amovible et rigide de chacun des points de fixation (51, 52) et/ou **en ce qu'**il existe la possibilité d'échanger individuellement chacun des éléments de serrage de pince (2).
